# EUROPÄISCHE PATENTANMELDUNG

(11) **EP 4 007 258 A1**
(43) Veröffentlichungstag der Anmeldung: **01.06.2022**
(21) Anmeldenummer: 21209657.2
(22) Anmeldetag: 22.11.2021
(51) Int. Cl.: H04N 5/225, G03B 37/04

(54) **PANORAMAKAMERA**

(30) Priorität: 27.11.2020 DE 102020131571
(71) Anmelder: Sporttotal Technology GmbH, 50829 Köln (DE)
(72) Erfinder: SCHLEICHER, Marco, 83043 Bad Aibling (DE); DÜRR, Tobias, 53501 Grafschaft (DE); LANGE, Frederik, 90408 Nürnberg (DE); SINGH, Maximilian, 90411 Nürnberg (DE)
(74) Vertreter: Richly & Ritschel Patentanwälte PartG mbB

(57) **Zusammenfassung**

Die Erfindung betrifft eine Panoramakamera, welche derart ausgeführt ist, dass die Panoramaaufnahmeerfassungseinheit möglichst unsensibel gegenüber Schwingungen des Gehäuses der Panoramakamera ist, dass die Panoramaaufnahmeerfassungseinheit möglichst von Schwingungen des Gehäuses der Panoramakamera entkoppelt ist, dass die Panoramakamera möglichst klein gestaltet ist, wodurch sie wenig anfällig für Windeinflüsse ist, und dass die Panoramakamera trotz ihrer geringen Baugröße thermisch stabil ist.

## Beschreibung

Die Erfindung betrifft eine Panoramakamera, insbesondere eine Panoramakamera zum Erfassen von Sportveranstaltungen.

Digitale Panoramakameras zum Erfassen von Veranstaltungen oder Szenen einer Veranstaltung, insbesondere Szenen von Sportveranstaltungen, sind aus dem Stand der Technik bekannt.

Derartige Panoramakameras sind in der Regel an einer gegenüber dem Spielfeld erhabenen Stelle angebracht, damit sie eine möglichst gute Perspektive auf das Spielfeld haben, wodurch eine möglichst übersichtliche Panoramaaufnahme von der Panoramakamera bereitgestellt werden kann.

Mit der designierten Positionierung einer Panoramakamera an einer gegenüber dem Spielfeld erhabenen Stelle ergibt sich, dass Panoramakameras in einer Vielzahl von Anwendungsfällen auch dem natürlich auftretenden Wind ausgesetzt sind.

Auf die Panoramakamera auftreffender Wind führt unweigerlich zu Vibrationen des Gehäuses der Panoramakamera, insbesondere zu Vibrationen im relativen Vergleich zu dem Spielfeld und/oder dem Spielgeschehen. Hierdurch kann die Aufnahmequalität einer Panoramakamera beeinträchtigt werden. Dieser Effekt verstärkt sich mit der Größe des betrachteten Spielfeldes, da hierdurch für eine gute Perspektive auf das Spielfeld auch die Positionierungshöhe der Panoramakamera gegenüber dem Spielfeld zunimmt, wodurch einerseits die lokalen Windgeschwindigkeiten mit der zunehmenden relativen Höhe und andererseits der mechanische Aufwand für eine möglichst steife Lagerung des Gehäuses der Panoramakamera ansteigen.

Der Erfindung liegt die Aufgabe zugrunde, dem Stand der Technik eine Verbesserung oder eine Alternative zur Verfügung zu stellen.

Die Aufgabe löst eine Panoramakamera zum Erfassen von Sportveranstaltungen umfassend zumindest ein Gehäuse, zumindest zwei Bildsensoren, wobei jedem Bildsensor ein Objektiv zugeordnet ist, wobei das Gehäuse eine designierte Oberseite aufweist, wobei die Bildsensoren mit einem gemeinsamen Bildsensorsockel verbunden sind.

Begrifflich sei hierzu Folgendes erläutert:
Zunächst sei ausdrücklich darauf hingewiesen, dass im Rahmen der hier vorliegenden Patentanmeldung unbestimmte Artikel und Zahlenangaben wie "ein", "zwei" usw. im Regelfall als "mindestens"-Angaben zu verstehen sein sollen, also als "mindestens ein...", "mindestens zwei ..." usw., sofern sich nicht aus dem jeweiligen Kontext ausdrücklich ergibt oder es für den Fachmann offensichtlich oder technisch zwingend ist, dass dort nur "genau ein ...", "genau zwei ..." usw. gemeint sein können.

Im Rahmen der hier vorliegenden Patentanmeldung sei der Ausdruck "insbesondere" immer so zu verstehen, dass mit diesem Ausdruck ein optionales, bevorzugtes Merkmal eingeleitet wird. Der Ausdruck ist nicht als "und zwar" und nicht als "nämlich" zu verstehen.

Unter einer "Panoramakamera" wird eine spezielle Bauform einer digitalen Kamera verstanden, welche zum Erfassen von Panoramaaufnahmen eingerichtet ist. Insbesondere ist eine Panoramakamera ein Gerät, welches zumindest zwei Bildsensoren aufweist, wobei jeder einzelne Bildsensor ein ihm zugeordnetes Objektiv aufweist, wobei die zumindest zwei Bildsensoren zeitsynchron ausgelöst werden und wobei die Einzelbilder eines jeden Bildsensors zeitsynchronisiert zu einer Panoramaaufnahme zusammengesetzt werden.

Vorzugsweise weist die Panoramakamera drei Bildsensoren oder zumindest drei Bildsensoren auf, wobei jeder einzelne Bildsensor ein ihm zugeordnetes Objektiv aufweist.

Vorzugsweise weist eine Panoramakamera eine Mehrzahl von Bildsensoren auf, welche in zwei oder mehr Ebenen angeordnet sind. Hierdurch kann bauartbedingt vorteilhaft erreicht werden, dass die Bildsensoren individuell näher an dem projizierten Schnittpunkt der optischen Achsen der einzelnen Bildsensoren angeordnet werden können, wobei die Bauweise der Panoramakamera verkleinert werden kann, wodurch die Steifigkeit des Bildsensorsockels erhöht werden kann, wodurch insgesamt die Sensitivität gegenüber dem umgebenden Wind auf die Qualität der Aufnahme der Panoramakamera verkleinert werden kann.

Vorzugsweise weist die Panoramakamera vier Bildsensoren oder zumindest vier Bildsensoren auf, wobei jeder einzelne Bildsensor ein ihm zugeordnetes Objektiv aufweist.

Vorzugsweise ist jeder Bildsensor unmittelbar oder zumindest mittelbar mit dem ihm zugeordneten Objektiv verbunden, wobei die Verbindung von Bildsensor und zugehörigem Objektiv das Gehäuse der Panoramakamera nicht miteinbezieht. Mit anderen Worten ist vorzugsweise jeder Bildsensor unmittelbar oder zumindest mittelbar auf direktem Weg mechanisch mit dem ihm zugeordneten Objektiv verbunden. Insbesondere wird die Relativposition zwischen einem Bildsensor und dem ihm zugeordneten Objektiv nicht von dem Gehäuse der Panoramakamera beeinflusst. Besonders bevorzugt bilden ein Bildsensor und das ihm zugeordnete Objektiv eine bauliche Einheit, vorzugsweise in einer kompakten Baugruppe.

Vorzugsweise sind die Bildsensoren auf einem gemeinsamen einstückig ausgeführten Bildsensorsockel angeordnet. Vorzugsweise bilden der einstückig ausgeführte Bildsensorsockel, die Bildsensoren und die jeweils den Bildsensoren zugeordneten Objektive eine unmittelbare bauliche Einheit.

Unter dem "Gehäuse" der Panoramakamera wird dasjenige Gehäuse verstanden, welches die Komponenten der Panoramakamera vor äußeren Windeinflüssen schützt. Insbesondere schließt das Gehäuse der Panoramakamera zumindest einen Bildsensor und das ihm zugeordnete Objektive fluiddicht gegenüber der Umwelt der Panoramakamera ein.

Unter einer "designierten Oberseite des Gehäuses" wird der Bereich des Gehäuses verstanden, vorzugsweise die Fläche des Gehäuses, welcher bei designierter Anbringung der Panoramakamera mit der größtmöglichen Ausprägung nach oben orientiert ist. Mit anderen Worten ist unter der designierten Oberseite des Gehäuses der Bereich des Gehäuses und/oder die Fläche des Gehäuses zu verstehen, welcher sich beim designierten Betrieb der Panoramakamera durch die innerhalb des Gehäuses aufsteigenden Abwärme der innerhalb der Panoramakamera verbauten Komponenten am stärksten erwärmt.

Unter einer "Panoramaaufnahme" wird eine Aufnahme verstanden, welche sich durch einen ungewöhnlich großen Betrachtungswinkel auszeichnet. Vorzugsweise weist eine Panoramaaufnahme einen Betrachtungswinkel von mindestens 180° auf. Vorzugsweise weist eine Panoramaaufnahme ein Seitenverhältnis von mehr als 4:3 auf, bevorzugt von mehr als 16:9 und besonders bevorzugt von mehr als 64:27.

Unter einem "Bildsensor" wird eine Vorrichtung zur Aufnahme von zweidimensionalen Abbildern aus Licht auf elektrischem Weg verstanden. Insbesondere weist ein Bildsensor eine optische Achse auf, welche durch den Flächenschwerpunkt des Bildsensors in Normalenrichtung zu dem Bildsensor verläuft.

Unter einem "Objektiv" wird ein sammelndes optisches System aufweisend zumindest eine Linse verstanden, welches eine reelle optische Abbildung eines Objektes erzeugt, vorzugsweise auf einem Bildsensor.

Vorzugsweise weist ein Objektiv eine Mehrzahl von Linsen auf.

Unter einem "Bildsensorsockel" wird eine Halterung verstanden, welche zur Verbindung mit den Bildsensoren der Panoramakamera eingerichtet ist und welche zur Lagerung der Bildsensoren eingerichtet ist. Insbesondere ist ein Bildsensorsockel ein Auflager für die Bildsensoren der Panoramakamera, mittels welchem die Bildsensoren einerseits unmittelbar untereinander gelagert sind und andererseits gemeinschaftlich unmittelbar oder zumindest mittelbar mit dem Gehäuse der Panoramakamera verbunden und damit gegenüber dem Gehäuse der Panoramakamera gelagert werden können.

Im Stand der Technik sind Panoramakameras mit einer Mehrzahl von Bildsensoren bekannt, wobei die einzelnen Bildsensoren nicht unmittelbar mit einem gemeinsamen Bildsensorsockel verbunden sind oder nicht mittels einem gemeinsamen Bildsensorsockel gelagert sind. Vielmehr sind die Bildsensoren der bekannten Panoramakameras lediglich mittelbar über das Gehäuse der Panoramakamera miteinander verbunden und/oder relativ zueinander gelagert. Hier wird nun eine Panoramakamera vorgeschlagen, insbesondere eine Panoramakamera zum Erfassen von Sportveranstaltungen, wobei die Panoramakamera zumindest zwei Bildsensoren umfasst, wobei jedem Bildsensor ein individuelles Objektiv zugeordnet ist, wobei die Bildsensoren mit einem gemeinsamen Bildsensorsockel verbunden sind. Mit anderen Worten erfolgt die Lagerung der Bildsensoren der hier vorgeschlagenen Panoramakamera mittels einem gemeinsamen Bildsensorsockel.

Hierdurch kann erreicht werden, dass die Bildsensoren untereinander nicht direkt mechanisch mittels dem Gehäuse der Panoramakamera verbunden sind und somit auch nicht unmittelbar mit diesem interagieren. Da das Gehäuse der Panoramakamera dem Wind der Umgebung der Panoramakamera ausgesetzt ist und dadurch in Schwingung versetzt werden kann, kann mittels der hier vorgeschlagenen besonders steif ausgeführten relativen Lagerung der Bildsensoren untereinander im Vergleich zu der bekannten vergleichsweise weichen Lagerung der Bildsensoren untereinander erreicht werden, dass die Relativposition der Bildsensoren untereinander von einer etwaigen Schwingung des Gehäuses der Panoramakamera entkoppelt werden kann. Dies führt dazu, dass bei dem Zusammensetzen der Panoramaaufnahme aus den einzelnen Aufnahmen der einzelnen Bildsensoren eine geringere Sensitivität der Relativpositionen der einzelnen Aufnahmen zueinander gegenüber einer designierten Schwingung des Gehäuses der Panoramakamera erreicht werden kann.

Zur Erfassung einer Panoramaaufnahme mittels einer Mehrzahl von Bildsensoren können diese vor oder hinter dem projizierten Schnittpunkt der optischen Achsen der einzelnen Bildsensoren angeordnet werden.

Je näher die Bildsensoren an dem projizierten Schnittpunkt der optischen Achsen der einzelnen Bildsensoren angeordnet werden können, desto größer ist die erreichbare Steifigkeit eines gemeinsamen Bildsensorsockels mit Bezug auf die Relativpositionen der Bildsensoren untereinander. Die Nähe der Bildsensoren zu dem projizierten Schnittpunkt der optischen Achsen der einzelnen Bildsensoren hängt unter anderem von dem Bauraumbedarf der Bildsensoren im Zusammenspiel mit den jeweils zugeordneten Objektiven ab.

Besonders bevorzugt wird hier ein Bildsensorsockel vorgeschlagen, der eine konvexe Anordnung der Bildsensoren zueinander vorsieht. Mit anderen Worten wird ein Bildsensorsockel vorgeschlagen, der dazu eingerichtet ist, dass die Bildsensoren vor dem projizierten Schnittpunkt der optischen Achsen der einzelnen Bildsensoren angeordnet werden können.

Hierdurch lässt sich eine besonders kompakte Bauweise des Bildsensorsockels erreichen, der eine vergleichsweise besonders steife Lagerung der Bildsensoren untereinander ermöglicht.

Vorzugsweise wird ein Bildsensorsockel vorgeschlagen, der eine konkave Anordnung der Bildsensoren zueinander vorsieht.

Die Steifigkeit der Lagerung der Bildsensoren untereinander hat einen Einfluss auf etwaig auftretende Schwingungen der Bildsensoren relativ zueinander, sowohl hinsichtlich der Amplitude und auch der Frequenz. Durch den hier vorgeschlagenen besonders steifen gemeinsamen Bildsensorsockel kann erreicht werden, dass etwaig auftretende relative Schwingungen zwischen den Bildsensoren nur besonders kleine und damit für die Qualität der Panoramaaufnahme unschädliche Amplituden aufweisen können.

Weiterhin gibt es einen Zusammenhang zwischen der Auslösefrequenz der Bildsensoren für die Panoramaaufnahme und den Frequenzen etwaig auftretender relativer Schwingungen zwischen den Bildsensoren. Durch den hier vorgeschlagenen besonders steifen gemeinsamen Bildsensorsockel können diese Effekte besonders vorteilhaft weitestgehend voneinander entkoppelt werden.

Vorzugsweise ist der Bildsensorsockel einstückig, besonders bevorzugt monolithisch, ausgeführt, wodurch die Steifigkeit des Bildsensorsockels mit Bezug auf sie Relativposition der Bildsensoren untereinander weiter vorteilhaft erhöht werden kann.

Gemäß einer zweckmäßigen Ausführungsform sind die Bildsensoren unmittelbar mit dem gemeinsamen Bildsensorsockel verbunden, wodurch ebenfalls die Steifigkeit mit Bezug auf die Relativpositionen der Bildsensoren untereinander erhöht werden kann.

Bevorzugt ist jeder Bildsensor mit dem ihm zugeordneten Objektiv verbunden.

Im Stand der Technik sind Ausführungen von Panoramakameras bekannt, in welchen ein Bildsensor mit seinem Objektiv mechanisch unmittelbar oder zumindest mittelbar lediglich über ein gemeinsames Gehäuse nicht aber direkt miteinander verbunden sind. Weiterhin sind im Stand der Technik Panoramakameras bekannt, deren zumindest zwei Bildsensoren mit den jeweils zugeordneten Objektiven mechanisch unmittelbar oder zumindest mittelbar nicht direkt, sondern lediglich über das Gehäuse der Panoramakamera miteinander verbunden sind.

Mit anderen Worten ist ein Bildsensor im Stand der Technik mit einer ersten Stelle des Gehäuses verbunden und das zugehörige Objektiv an einer zweiten Stelle des Gehäuses verbunden, wodurch die Relativposition von Bildsensor und zugehörigem Objektiv unmittelbar von dem Gehäuse mitbeeinflusst wird. Ein durch den Wind zu Schwingungen angeregtes Gehäuse hat damit einen Einfluss auf die Relativposition von Bildsensor und zugehörigem Objektiv und damit auf die Qualität der Panoramaaufnahme.

Hier wird eine Panoramakamera vorgeschlagen, bei welcher jeder Bildsensor auf direktem Wege mechanisch mit dem ihm zugeordneten Objektiv verbunden ist.

Vorteilhaft kann hierdurch die Steifigkeit zwischen einem jeden Bildsensor und dem ihm direkt zugeordneten Objektiv erhöht werden, wodurch Schwingungen zwischen dem einzelnen Bildsensor und dem ihm zugeordneten Objektiv in dem relevanten Frequenzbereich unterbunden oder zumindest signifikant abgeschwächt werden können. Hierdurch kann die Bildqualität der Panoramaaufnahme verbessert werden.

Vorzugsweise ist ein Bildsensor und das ihm zugeordnete Objektiv unmittelbar miteinander verbunden, wodurch die Steifigkeit hinsichtlich der Relativposition von Bildsensor und dem ihm zugeordneten Objektiv verbessert werden kann.

Gemäß einer zweckmäßigen Ausführungsform sind der Bildsensorsockel, die Bildsensoren und die jedem Bildsensor zugeordneten Objektive Bestandteile einer gemeinsamen Bilderfassungsbaugruppe.

Begrifflich sei hierzu Folgendes erläutert:
Unter einer "Bilderfassungsbaugruppe" wird eine Baugruppe verstanden, welche zumindest den Bildsensorsockel, die Bildsensoren und die jedem Bildsensor individuell zugeordneten Objektive aufweist, wobei die vorgenannten Komponenten jeweils dazu eingerichtet sind, paarweise untereinander verbunden werden zu können, sodass sie gemeinsam die Bilderfassungsbaugruppe bilden. Die Bilderfassungsbaugruppe ist dazu eingerichtet, gemeinschaftlich unmittelbar oder zumindest mittelbar mit dem Gehäuse der Panoramakamera verbunden zu werden.

Vorzugsweise ist lediglich der Bildsensorsockel dazu eingerichtet, unmittelbar oder zumindest mittelbar mit dem Gehäuse der Panoramakamera verbunden zu werden. Die weiteren Komponenten werden dann lediglich mittelbar mittels dem Bildsensorsockel mit dem Gehäuse verbunden.

Vorzugsweise weist die Bilderfassungsbaugruppe noch weitere Komponenten auf.

Hier wird vorgeschlagen, dass Bildsensorsockel, Bildsensoren und die zugeordneten Objektive Bestandteile einer Bildsensorbaugruppe sind, welche dazu eingerichtet ist, mittels dem Bildsensorsockel unmittelbar oder zumindest mittelbar mit dem Gehäuse der Panoramakamera verbunden zu werden.

Vorteilhaft kann hierdurch erreicht werden, dass die Komponenten der Bildsensorbaugruppe untereinander möglichst steif miteinander verbunden sind und so eine vergleichsweise steif ausgeführte Einheit bilden, wodurch die Anfälligkeit der an der Panoramaaufnahmeerfassung beteiligten Komponenten gegenüber Schwingungen deutlich reduziert werden kann.

Weiterhin ermöglicht die Bilderfassungsbaugruppe, dass lediglich eine Verbindung zwischen dem Bildsensorsockel und dem Gehäuse der Panoramakamera bereitgestellt werden kann, während alle andere Komponenten der Bildsensorbaugruppe nur mittelbar mittels zumindest dem Bildsensorsockel mit dem Gehäuse verbunden werden können. Hierdurch kann eine Entkopplung der Schwingungen zwischen dem Gehäuse der Panoramakamera und einzelnen Komponenten der Bilderfassungsbaugruppe erreicht werden, sodass sich Schwingungen von dem Gehäuse der Panoramakamera nur gesamtheitlich auf die vergleichsweise steife Bildsensorbaugruppe übertragen können und nicht separat auf einzelne Komponenten und mit jeweils unterschiedlichen Übertragungsfunktionen.

Bevorzugt ist der Bildsensorsockel zumindest mittelbar mittels Stelzen mit dem Gehäuse verbunden.

Begrifflich sei hierzu Folgendes erläutert:
Unter einer "Stelze" wird vorzugsweise ein Vorsprung des Gehäuses verstanden, welcher an seiner erhabenen Seite ein Verbindungselement aufweist, welches für eine designierte Verbindung mit dem Bildsensorsockel und/oder einer Zwischenplatte eingerichtet ist.

Vorzugsweise hat eine Stelze eine überwiegend zylindrische Grundform. Vorzugsweise hat eine Stelze die Grundform eines sich in Längsrichtung erstreckenden Vielecks.

Vorzugsweise weist eine Stelze die Form eines Stabes auf. Besonders bevorzugt ist die Stelze mittels einer Festlagerung mit dem Gehäuse der Panoramakamera verbunden.

Vorzugsweise weist eine Stelze ein Dämpfungselement auf.

Vorzugsweise ist eine Stelze oder ein System aus mehreren Stelzen zur Entkopplung von Schwingungen zwischen dem Gehäuse und dem Bildsensorsockel eingerichtet.

Vorzugsweise ist eine Stelze oder ein System aus mehreren Stelzen zur elastischen Lagerung des Bildsensorsockels gegenüber dem Gehäuse der Panoramakamera eingerichtet.

Vorzugsweise weist die Panoramakamera drei, vier oder mehr als vier Stelzen auf.

Hier wird vorgeschlagen, dass der Bildsensorsockel nicht flächig mit dem Gehäuse der Panoramakamera verbunden wird, sondern vielmehr mittels Stelzen. Auf diese Weise entsteht ein Raum zwischen dem Bildsensorsockel und dem Gehäuse.

Vorteilhaft kann hierdurch eine vergleichsweise elastische Lagerung des Bildsensorsockels in dem Gehäuse erreicht werden, wodurch eine Entkopplung von etwaigen Schwingungen des Gehäuses und etwaigen Schwingungen des Bildsensorsockels erreicht werden kann.

Vorzugsweise sind die Stelzen nur an einer Seite des Gehäuses angeordnet. Hierdurch kann eine Entkopplung des Bildsensorsockels von komplexen Eigenschwingungsformen des Gehäuses der Panoramakamera erreicht werden.

Die Entkopplung von Schwingungen des Gehäuses von Schwingungen des Bildsensorsockels macht die Panoramaaufnahme weniger anfällig gegenüber Schwingungen des Gehäuses der Panoramakamera, insbesondere für windinduzierte Schwingungen des Gehäuses. Hierdurch kann vorteilhaft die Anfälligkeit der Panoramakamera gegenüber äußeren Einflüssen reduziert werden.

Zweckmäßig sind die Stelzen ausschließlich mit der designierten Oberseite des Gehäuses verbunden.

Die hier vorgeschlagene Panoramakamera weist elektronische Komponenten auf, welche im designierten Betrieb der Panoramakamera Abwärme abgeben. Da die hier vorgeschlagene Panoramakamera auch für den Außeneinsatz konzipiert ist, kann sie feuchten Witterungsbedingungen ausgesetzt sein, wodurch ein Spülen des die Bildsensoren und/oder eine Hauptplatine aufnehmenden Gehäuseteils mit kalter Außenluft nicht möglich ist. Mit anderen Worten muss der Abwärmestrom dieser Komponenten über die Gehäusewand in die Umgebung der Panoramakamera übergehen, damit die Temperatur innerhalb der Panoramakamera nicht stetig weiter ansteigt und die Panoramakamera thermisch stabil ausgeführt ist.

Zur Erreichung einer thermischen Stabilität ist ein besonders großes Gehäuse wünschenswert. Zur Reduzierung von windinduzierten Schwingungen ist ein besonders kleines Gehäuse wünschenswert. Diesen Gegensatz löst die hier vorgeschlagene Panoramakamera mittels ihrer Merkmale, welche zu einem optimal kleinen und gleichzeitig thermisch stabilen Gehäuse beitragen.

Durch die hier konkret vorgeschlagene Ausführungsform, bei welcher die Stelzen ausschließlich mit der designierten Oberseite des Gehäuses verbunden sind, kann erreicht werden, dass ein Raum zwischen der Oberseite des Gehäuses der Panoramakamera und dem Bildsensorsockel erreicht werden kann. Im designierten Betrieb steigt der von den Komponenten ausgehende Wärmestrom infolge der Thermik innerhalb des Gehäuses in dem Gehäuse nach oben, sodass sich die Abwärme abseits der Bildsensoren oben in dem Gehäuse in dem Raum zwischen den Bildsensoren und der Oberseite des Gehäuses ansammelt und durch das Gehäuse in die Umgebung der Kamera übergeht. Auf diese Weise werden die Bildsensoren und der Bildsensorsockel weniger von der Abwärme der Bildsensoren beeinflusst, wodurch das Gehäuse insgesamt kleiner ausgeführt werden kann.

Weiterhin haben Versuche gezeigt, dass die hier vorgeschlagene Bauform, bei der die Stelzen ausschließlich mit der designierten Oberseite des Gehäuses verbunden sind, besonders vorteilhaft für die Entkopplung der Schwingungen zwischen Gehäuse und Bildsensorsockel geeignet ist.

Optional ist der Bildsensorsockel mittels einer Zwischenplatte mit den Stelzen verbunden.

Begrifflich sei hierzu Folgendes erläutert:
Unter einer "Zwischenplatte" wird ein flaches sich in einer Ebene erstreckendes Bauteil verstanden, welches zur zumindest mittelbaren Verbindung von Bildsensorsockel und Stelzen eingerichtet ist.

Vorzugsweise weist eine Zwischenplatte einen oder mehrere Durchbrüche auf, welche dazu eingerichtet sind, von Komponenten der Panoramakamera durchdrungen zu werden und/oder Luft durch die Ebene der Zwischenplatte zirkulieren zu lassen, sodass ein Wärmestrom mittels Luftstrom die Zwischenplatte passieren kann.

Vorzugsweise ist die Zwischenplatte zur elastischen Lagerung des Bildsensorsockels auf den Stelzen eingerichtet.

Vorzugsweise ist die Zwischenplatte zur Entkopplung von Schwingungen zwischen den Stelzen und damit mittelbar auch dem Gehäuse und dem Bildsensorsockel eingerichtet.

Mit der hier vorgeschlagenen Lagerung des Bildsensorsockels mittels einer Zwischenplatte kann der Bildsensorsockel noch besser von Schwingungen des Gehäuses entkoppelt werden, da die Zwischenplatte in vorteilhafter Weise eine elastische Lagerung des Bildsensorsockels unterstützt, insbesondere gegenüber windinduzierten Schwingungsformen unterstützt.

Weiterhin trägt die Zwischenplatte zur Verbesserung der thermischen Stabilität der Panoramakamera bei, da sie einerseits den Raum zwischen dem oberen Bereich des Gehäuses und dem Bildsensorsockel trennt und damit als thermischer Isolator wirkt und andererseits durch ihre abseits des Bildsensorsockels vorzugsweise ausgestalteten Öffnungen einen Wärmestrom in den oberen Bereich des Gehäuses unterstützt, sodass sich die Wärme nicht in der unmittelbaren Nähe der Bildsensoren und/oder der Objektive ansammelt.

Bevorzugt ist der Bildsensorsockel asymmetrisch zu der Erstreckung der Zwischenplatte angeordnet.

Begrifflich sei hierzu Folgendes erläutert:
Unter einer "asymmetrischen Anordnung" wird eine Anordnung verstanden, welche von einer symmetrischen Anordnung abweicht. Insbesondere wird von einer asymmetrischen Anordnung gesprochen, wenn ein Objekt, insbesondere der Bildsensorsockel, nicht zentrisch zu einem anderen Objekt, insbesondere der Zwischenplatte, und/oder zu einer Verteilung der Stelzen angeordnet ist.

Hierdurch kann vorteilhaft erreicht werden, dass der Bildsensorsockel besonders gut von er Schwingung des Gehäuses entkoppelt werden kann.

Weiterhin verbessert die asymmetrische Anordnung die thermische Stabilität, da die thermische Isolation zwischen dem Bildsensorsockel und dem Raum zwischen Bildsensorsockel und oberer Gehäuseseite verbessert und gleichzeitig die Zirkulation abseits des Bildsensorsockels für einen besseren Wärmestrom von dem Bildsensorsockel in den Raum an der oberen Gehäuseseite verbessert werden kann.

Weiterhin bevorzugt ist der Bildsensorsockel asymmetrisch zu einer Verteilung der Stelzen angeordnet.

Begrifflich sei hierzu Folgendes erläutert:
Unter einer "Verteilung der Stelzen" wird die Verteilung der Position der einzelnen Stelzen verstanden.

Auch hierdurch können die Entkopplung des Bildsensorsockels von Schwingungen des Gehäuses und/oder die thermische Stabilität der Panoramakamera verbessert werden.

Gemäß einer zweckmäßigen Ausführungsform ist zwischen dem Bildsensorsockel und der designierten Oberseite des Gehäuses ein Aufnahmeraum zur Aufnahme einer Hauptplatine der Panoramakamera angeordnet, wobei die Hauptplatine in dem Aufnahmeraum angeordnet ist.

Begrifflich sei hierzu Folgendes erläutert:
Ein "Aufnahmeraum" ist dazu eingerichtet, eine Hauptplatine aufzunehmen und vor äußeren Einflüssen zu schützen.

Vorzugsweise weist ein Aufnahmeraum Befestigungsmöglichkeiten für die Hauptplatine auf.

Unter einer "Hauptplatine" wird die zentrale Platine der Panoramakamera verstanden.

Vorzugsweise weist die Hauptplatine zumindest einen Prozessor und/oder zumindest einen Speicherbaustein auf.

Vorzugsweise ist die Hauptplatine zum Erstellen einer Panoramaaufnahme aus den von den Bildsensoren bereitgestellten Informationen eingerichtet.

Vorzugsweise weist die Hauptplatine einen oder mehrere Durchbrüche auf, durch welche sich die Stelzen durch die Hauptplatine hindurch erstrecken können.

Zur Verbesserung der thermischen Stabilität der Panoramakamera wird vorgeschlagen, die Hauptplatine in dem Raum zwischen der Oberseite des Gehäuses und dem Bildsensorsockel aufzunehmen. Somit kann die von der Hauptplatine ausgehende Abwärme ideal aus dem Gehäuse geführt werden, ohne zuvor den Bildsensorsockel passieren zu müssen.

Besonders bevorzugt weist die Hauptplatine auf der Seite, welche der designierten Oberseite des Gehäuses zugewandt ist, zumindest einen Prozessor und/oder zumindest eine Speichereinheit auf.

Mit anderen Worten wird hier vorgeschlagen, dass diejenigen Komponenten der Hauptplatine, welche im designierten Betrieb der Panoramakamera die meiste Abwärme erzeugen, auf der Oberseite der Hauptplatine angeordnet sind.

Hierdurch kann die thermische Stabilität der Panoramakamera bei einem besonders klein ausgeführten Gehäuse weiter verbessert werden.

Besonders zweckmäßig weist das Gehäuse an der designierten Oberseite eine Profilierung auf.

Begrifflich sei hierzu Folgendes erläutert:
Unter einer "Profilierung" wird eine dreidimensionale Formgebung einer Oberfläche verstanden, mittels welcher die Fläche der Oberfläche gegenüber einer rein ebenen Formgebung vergrößert wird.

Hierdurch kann vorteilhaft erreicht werden, dass der Wärmeübergang von dem Gehäuse auf die Umgebung des Gehäuses verbessert werden kann, wodurch die thermische Stabilität der Panoramakamera verbessert werden kann.

Weitere Vorteile, Einzelheiten und Merkmale der Erfindung ergeben sich nachfolgend aus den erläuterten Ausführungsbeispielen. Dabei zeigen im Einzelnen:
Figur 1: schematisch eine Ansicht des Innenraums einer Panoramakamera; und

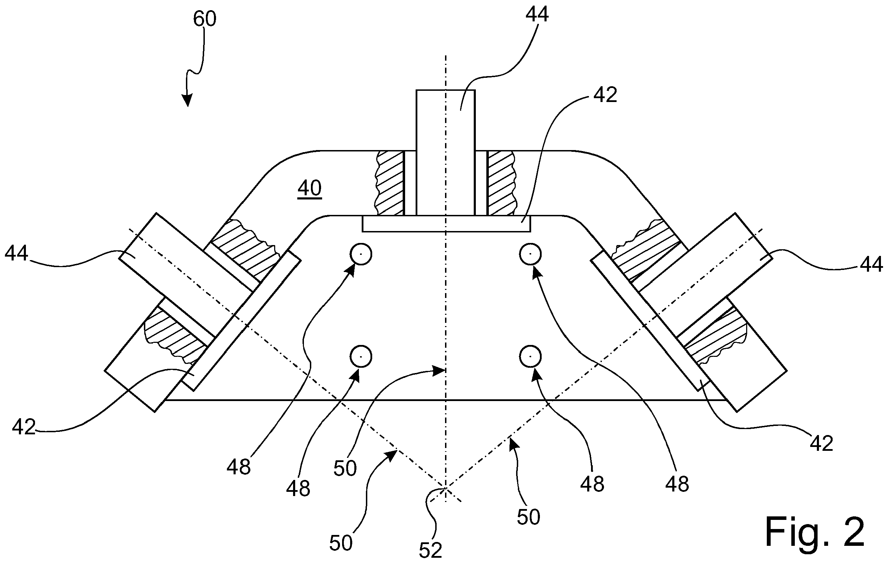

Figur 2: schematisch eine Bilderfassungsbaugruppe.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

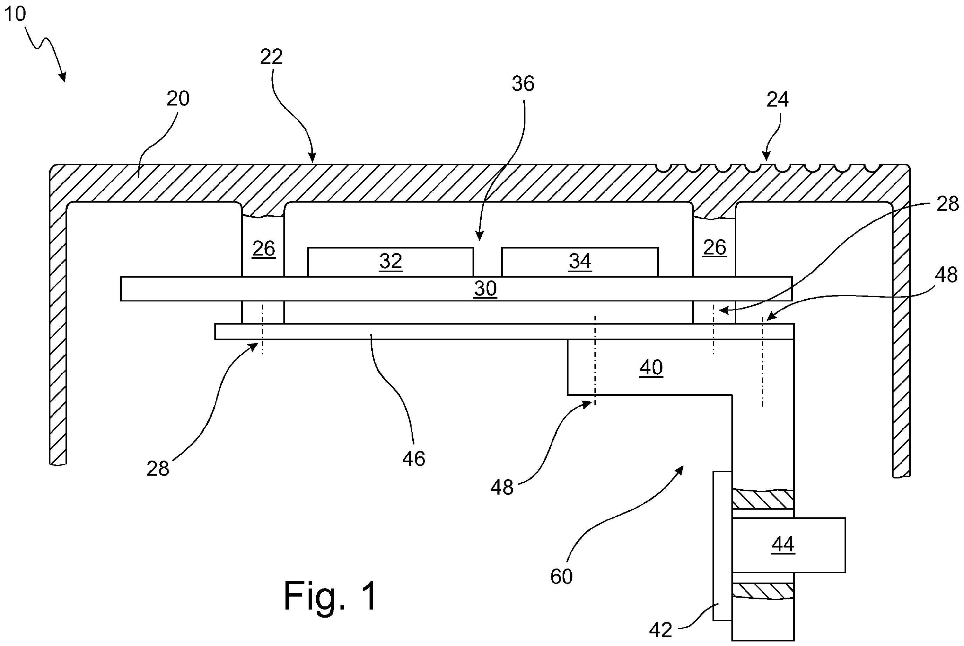

Die Panoramakamera 10 in Figur 1 besteht im Wesentlichen aus einem Gehäuse 20, in welchem die Komponenten der Panoramakamera 10 vor den Witterungseinflüssen der Umgebung geschützt werden.

Das Gehäuse 20 der Panoramakamera 10 weist eine Oberseite 22 auf, welche beim designierten Einsatz der Panoramakamera im Wesentlichen nach oben orientiert ist.

Im Inneren des Gehäuses 20 ist die Bilderfassungsbaugruppe 60 angeordnet, welche im Wesentlichen aus einem Bildsensorsockel 40, einer Mehrzahl von Bildsensoren 42 (schematisch ist vereinfacht nur ein Bildsensor dargestellt) und einer Mehrzahl von Objektiven 44 besteht, wobei jedem Bildsensor 42 jeweils ein Objektiv 44 zugeordnet ist.

Weiterhin weist die Panoramakamera 10 eine Hauptplatine 30 auf, welche zur Verarbeitung der von den Bildsensoren 42 bereitgestellten Daten eingerichtet ist. Hierzu weist die Hauptplatine 30 unter anderem zumindest einen Prozessor 32 und zumindest eine Speichereinheit 34 auf.

Der Bildsensorsockel 40 verbindet die Bildsensoren 40 untereinander, wodurch die Relativpositionen der Bildsensoren 42 vergleichsweise steif zueinander gelagert werden. Hierzu sind die Bildsensoren 42 mit dem Bildsensorsockel unmittelbar oder zumindest mittelbar verbunden.

Vorzugsweise ist der Bildsensorsockel 40 einstückig, besonders bevorzugt monolithisch ausgeführt.

Jedem Bildsensor 42 ist ein Objektiv 44 zugeordnet. Hierzu sind je ein Objektiv 44 und ein Bildsensor unmittelbar oder zumindest mittelbar miteinander verbunden. Die Objektive 44 der hier vorgeschlagenen Panoramakamera 10 sind nicht direkt mit dem Gehäuse 20 der Panoramakamera 10 verbunden.

Die vorstehend beschriebenen Merkmale der Bilderfassungsbaugruppe 60 ermöglichen, dass die Bildsensoren 42 mitsamt der zugeordneten Objektive 44 mittels dem Bildsensorsockel 40 relativ zueinander besonders steif gelagert sind, sodass die Bilderfassungsbaugruppe 60 nur eine geringfügige oder keine Anfälligkeit gegenüber äußeren Schwingungen aufweist.

Die Bilderfassungsbaugruppe 60 ist mittels der Verbindungsmittel 48 mit einer Zwischenplatte 46 verbunden, welche wiederum mittels der Verbindungsmittel 28 mit den Stelzen 26 des Gehäuses 20 verbunden sind. Hierdurch kann eine besonders elastische Lagerung der Bilderfassungsbaugruppe 60 innerhalb der Panoramakamera erreicht werden, wodurch eine Entkopplung oder eine weitgehende Entkopplung der Bilderfassungsbaugruppe 60 von Schwingungen des Gehäuses 20 der Panoramakamera 10 erreicht werden kann.

Alternativ kann die Bilderfassungsbaugruppe 60 auch unmittelbar mit den Stelzen 26 des Gehäuses 20 verbunden sein, wodurch ebenfalls eine hervorragende Entkopplung der Bilderfassungsbaugruppe 60 von Schwingungen des Gehäuses 20 erreicht werden kann.

Die Stelzen 26 sind monolithisch mit dem Gehäuse 20 ausgeformt oder mit dem Gehäuse 20 unmittelbar oder zumindest mittelbar fest verbunden.

Mittels der Stelzen 26 kann die Bilderfassungsbaugruppe 60 beabstandet von den Gehäuse 20 innerhalb des Gehäuses 20 angeordnet werden. Hierdurch kann die Entkopplung von Schwingungen zwischen der Bilderfassungsbaugruppe 60 und dem Gehäuse 20 verbessert werden. Außerdem ermöglichen die Stelzen 26 einen Aufnahmeraum 36, welcher zum Aufnahme der Hauptplatine 30 eingerichtet ist.

Die Anordnung von Hauptplatine 30 und Bilderfassungsbaugruppe 60 innerhalb des Gehäuses 20 ermöglicht eine besonders gute thermische Stabilität der Panoramakamera. Die von den elektrischen und elektronischen Komponenten der Panoramakamera 10 abgegebenen Wärme kann infolge der vorteilhaften Anordnung der Komponenten an der Oberseite 22 des Gehäuses 20 gesammelt werden. Hierdurch wird die Bilderfassungsbaugruppe nur minimal von der Abwärme beeinflusst, sodass keiner oder nur ein geringfügiger thermischer Verzug zwischen den Bildsensoren entsteht.

Zum besseren Transport des Wärmestroms an die Oberseite 22 des Gehäuses 20 kann die Zwischenplatte 46 einen oder eine Mehrzahl von Durchbrüchen aufweisen, sodass sich die Thermik im Inneren des Gehäuses 20 vergleichsweise ungestört ausprägen kann.

Die an der Oberseite 22 des Gehäuses 20 gesammelte Abwärme kann durch das Gehäuse 20 die Panoramakamera in die Umgebung der Panoramakamera verlassen. Um diesen Vorgang zu beschleunigen, weist das Gehäuse 20 eine Profilierung 24 auf, welche die Oberfläche des Gehäuses 20 vergrößert.

Die thermische Stabilität der Panoramakamera 10 kann ebenfalls dadurch verbessert werden, dass die zumindest eine Speichereinheit 34 und/oder der zumindest eine Prozessor 32 der Hauptplatine 30 an der der Oberseite 22 des Gehäuses 20 zugewandten Seite angeordnet sind. Hierdurch kann die von der zumindest einen Speichereinheit 34 und/oder dem zumindest einen Prozessor 32 abgegebene Wärme in direkter Umgebung der Oberseite 22 des Gehäuses 20 freigesetzt werden und so vergleichsweise schnell über das Gehäuse 20 die Panoramakamera 10 verlassen.

Die Bilderfassungsbaugruppe 60 in Figur 3 weist drei Bildsensoren 42 mit jeweils zugeordneten Objektiven 44 auf. Hierbei sind die Objektive 44 unmittelbar mit den Bildsensoren 42 und dieses unmittelbar mit dem gemeinsamen Bildsensorsockel 40 verbunden.

Jede Einheit aus Bildsensor 42 und zugeordnetem Objektiv 44 weist eine individuelle optische Achse 50 auf, welche sich in einem gemeinsamen Schnittpunkt 52 schneiden.

Die Bildsensoren 42 sind hierbei konvex um den Schnittpunkt 52 der optischen Achsen 50 angeordnet.

Die Bildsensorbaugruppe 60 kann mittels der Verbindungsmittel 48 in einer Panoramakamera 10 angeordnet werden.

### Bezugszeichenliste

- 10: Panoramakamera
- 20: Gehäuse der Panoramakamera
- 22: Oberseite des Gehäuses der Panoramakamera
- 24: Profilierung
- 26: Stelzen
- 28: Verbindungsmittel
- 30: Hauptplatine
- 32: Prozessor
- 34: Speichereinheit
- 36: Aufnahmeraum
- 40: Bildsensorsockel
- 42: Bildsensor
- 44: Objektiv
- 46: Zwischenplatte
- 48: Verbindungsmittel
- 50: optische Achse
- 52: Schnittpunkt der optischen Achsen
- 60: Bilderfassungsbaugruppe

## Patentansprüche

1. Panoramakamera (10) zum Erfassen von Sportveranstaltungen umfassend zumindest ein Gehäuse (20), zumindest zwei Bildsensoren (42), wobei jedem Bildsensor (42) ein Objektiv (44) zugeordnet ist, wobei das Gehäuse (20) eine designierte Oberseite (22) aufweist,
**dadurch gekennzeichnet, dass**
die Bildsensoren (42) mit einem gemeinsamen Bildsensorsockel (40) verbunden sind.

2. Panoramakamera (10) nach Anspruch 1, **dadurch gekennzeichnet, dass** jeder Bildsensor (42) mit dem ihm zugeordneten Objektiv (44) verbunden ist.

3. Panoramakamera (10) nach einem der Ansprüche 1 oder 2, **dadurch gekennzeichnet, dass** der Bildsensorsockel (40), die Bildsensoren (42) und die jedem Bildsensor (42) zugeordneten Objektive (44) Bestandteile einer gemeinsamen Bilderfassungsbaugruppe (60) sind.

4. Panoramakamera (10) nach einem der vorstehenden Ansprüche, **dadurch gekennzeichnet, dass** der Bildsensorsockel (40) zumindest mittelbar mittels Stelzen (26) mit dem Gehäuse (20) verbunden ist.

5. Panoramakamera (10) nach Anspruch 4, **dadurch gekennzeichnet, dass** die Stelzen (26) ausschließlich mit der designierten Oberseite (22) des Gehäuses (20) verbunden sind.

6. Panoramakamera (10) nach einem der Ansprüche 4 oder 5, **dadurch gekennzeichnet, dass** der Bildsensorsockel (40) mittels einer Zwischenplatte (46) mit den Stelzen (26) verbunden ist.

7. Panoramakamera (10) nach Anspruch 6, **dadurch gekennzeichnet, dass** der Bildsensorsockel (40) asymmetrisch zu der Erstreckung der Zwischenplatte (46) angeordnet ist.

8. Panoramakamera (10) nach einem der Ansprüche 4 bis 7, **dadurch gekennzeichnet, dass** der Bildsensorsockel (40) asymmetrisch zu einer Verteilung der Stelzen (26) angeordnet ist.

9. Panoramakamera (10) nach einem der vorstehenden Ansprüche, **dadurch gekennzeichnet, dass** zwischen dem Bildsensorsockel (40) und der designierten Oberseite (22) des Gehäuses (20) ein Aufnahmeraum (36) zur Aufnahme einer Hauptplatine (30) der Panoramakamera (10) angeordnet ist, wobei die Hauptplatine (30) in dem Aufnahmeraum (36) angeordnet ist.

10. Panoramakamera (10) nach Anspruch 9, **dadurch gekennzeichnet, dass** die Hauptplatine (30) auf der Seite, welche der designierten Oberseite (22) des Gehäuses (20) zugewandt ist, zumindest einen Prozessor (32) und/oder zumindest eine Speichereinheit (34) aufweist.

11. Panoramakamera (10) nach einem der vorstehenden Ansprüche, **dadurch gekennzeichnet, dass** das Gehäuse (20) an der designierten Oberseite (22) eine Profilierung (24) aufweist.
